# EUROPÄISCHE PATENTSCHRIFT

(11) **EP 1 344 657 B1**
(45) Veröffentlichungstag und Bekanntmachung des Hinweises auf die Patenterteilung: **02.08.2006**
(21) Anmeldenummer: 03002253.7
(22) Anmeldetag: 01.02.2003
(51) Int. Cl.: B60C 17/04, B60C 17/06

(54) **Fahrzeugrad mit einem Notlaufstützkörper**
Vehicle wheel with a run flat support body
Roue de véhicule comportant un corps d'appui pour roulage à plat

(30) Priorität: 16.03.2002 DE 10211830
(43) Veröffentlichungstag der Anmeldung: 17.09.2003
(73) Patentinhaber: Continental Aktiengesellschaft, 30165 Hannover (DE)
(72) Erfinder: Kurz, Martin, 30163 Hannover (DE); Busche, Joachim, 30419 Hannover (DE); Kaiser, Silvia, 30659 Hannover (DE)

(56) Entgegenhaltungen:
- WO-A-99/64260
- GB-A- 1 138 731
- US-A- 4 177 849
- US-A- 4 346 747

## Beschreibung

Die Erfindung betrifft ein Fahrzeugrad mit einem auf einer Radfelge befestigten Luftreifen und einem Notlaufstützkörper, der als schalenförmiger Ringkörper ausgebildet ist und sich mit seinen beiden axial äußeren Randbereichen über ringförmige Stützelemente auf der Radfelge abstützt.

Ein wesentlicher Nachteil von schlauchlosen Luftreifen ist das mögliche Auftreten einer Undichtigkeit, wodurch der Luftdruck im Reifen abfällt und der Reifen kollabiert. Bei einer hohen Fahrzeuggeschwindigkeit kann das plötzliche Entweichen der Luft im Reifen zu gefährlichen Situationen führen, in denen der Fahrer die Kontrolle über sein Fahrzeug verliert. Ferner kann der Reifen bei einem Druckverlust dadurch beschädigt werden, dass die Fahrzeugfelge sich in die Innenseele und darüber liegende Lagen einschneidet.

Für Luftreifen sind verschiedene Notlaufstützkörper-Systeme bekannt.
Die DE 197 07 090 A1 offenbart ein Fahrzeugrad mit einem innerhalb des Luftreifenhohlraumes auf der Felge abgestützten Notlaufstützkörper, der aus einem schalenförmigen Ringkörper gebildet wird. Der Notlaufstützkörper wird über ein oder mehrere Stützelemente auf der Felge abgestützt. Die Stützelemente gehen dabei in den schalenförmigen Ringkörper über und sind entweder ein Teil desselben oder bestehen aus einem im Vergleich zum schalenförmigen Ringkörper anderen Werkstoff.
In der US-A-4 177 849 ist ein Notlaufstützkörper offenbart bei dem der Stützkörper aus einem elastischen Material besteht und die Seitenbereiche des Stützkörpers mit einer Klemmvorrichtung gegen die Reifenwülste gedrückt werden.

In der DE 198 25 311 C1 ist ein anderes Notlaufstützkörpersystem offenbart, bei dem ein schalenförmiger Ringkörper innerhalb des Luftreifenhohlraumes angeordnet ist. Die beiden axial äußeren Randbereiche des Notlaufstützkörpers stützen sich über zwei elastische ringförmige Stützelemente auf der Felge ab. Die Stützelemente besitzen in radialer sowie axialer Richtung unterschiedliche Elastizitätskennwerte und sind mit dem metallischen Notlaufstützkörper stoffschlüssig verbunden. Der Notlaufstützkörper ist ferner als geschlitzter Ringkörper mit einem in axialer Richtung verlaufenden Öffnungsschlitz ausgebildet, wodurch die Montage auf die Felge ermöglicht wird. Der Notlaufstützkörper wird im Bereich des Öffnungsschlitzes auseinandergezogen und anschließend in den Reifenhohlraum hineingedreht. Der Öffnungsschlitz wird danach über einen oder mehrere Flansche verbunden.

Ein Nachteil der Notlaufstützkörper mit Flanschverbindungen besteht darin, dass ein Luftaustausch zwischen dem Hohlraum des Notlaufstützkörpers und dem Hohlraum zwischen Notlaufstützkörper sowie Reifeninnenseite im Wesentlichen über die Schlitze in den Flanschen erfolgt. Da diese Schlitze nur einen geringen Querschnitt besitzen, kann der Luftaustausch zwischen den beiden Hohlräumen nur relativ langsam erfolgen. Dadurch wird der Federungskomfort der Reifen erheblich reduziert, weil als Luftpolster bei schnellen Bewegungen des Reifens nur das Luftvolumen des oberen Hohlraums zwischen Notlaufstützkörper und Reifeninnenseite zur Verfügung steht. Ein weiterer Nachteil ist der, dass das Befüllen eines Reifens mit einem Notlaufstützkörper eine relativ lange Zeit in Anspruch nimmt, da die Druckluft vom Hohlraum des Notlaufstützkörpers in den Hohlraum zwischen Notlaufstützkörper und Reifeninnenseite gelangen muss. Die Zeit zum Befüllen des Reifens erhöht sich noch einmal dadurch, dass spezielle Notlaufstützkörper keine Flanschverbindungen besitzen, sondern aus einem geschlossenen Ring bestehen.

Der Erfindung liegt die Aufgabe zu Grunde, einen Notlaufstützkörper für einen Luftreifen zu schaffen, der die Federungseigenschaften des Luftreifens erhöht, ein schnelles Befüllen des Luftreifens mit Druckluft ermöglicht und die Festigkeitseigenschaften des Notlaufstützkörpers weitesgehend erhält.

Gelöst wird die Aufgabe gemäß Anspruch 1.

Ein Vorteil ist insbesondere darin zu sehen, dass die Öffnungen einen schnellen bzw. unverzögerten Luftaustausch zwischen dem Hohlraum des Notlaufstützkörpers und dem Hohlraum zwischen Notlaufstützkörper und Reifeninnenseite ermöglichen. Auf diese Weise vergrößert sich das für die Federung des Reifens zur Verfügung stehende Luftpolster, da der Luftaustausch zwischen den beiden Hohlräumen über die Öffnungen ungehindert erfolgen kann. Durch das vergrößerte Luftpolster wird die Federungseigenschaft und damit der Fahrkomfort erheblich gesteigert. Ferner ermöglichen die Öffnungen ein schnelles Befüllen eines Reifens mit einem Notlaufstützkörper, da der zur Verfügung stehende Strömungsquerschnitt im Notlaufstützkörper größer ist.

In einer vorteilhaften Weiterbildung der Erfindung ist vorgesehen, dass der Ringkörper zwei durch eine radiale Einschnürung voneinander getrennte nach radial außen gekrümmte Wölbungen aufweist. Diese Kontur zeichnet sich im Wesentlichen durch eine Aufteilung der Notlauffläche in zwei Schulterbereiche aus. Die Kurvenform des Ringkörpers bewirkt zusammen mit den Elastizitätseigenschaften der Stützelemente ein Laufverhalten im Pannenfall, welches die Fahrbereitschaft des Fahrzeuges vollständig erhält.

In einer weiteren vorteilhaften Weiterbildung der Erfindung ist vorgesehen, dass die Öffnungen außerhalb der radial äußersten Stellen der nach radial außen gekrümmten Wölbungen und außerhalb der radial innersten Stelle der radialen Einschnürung angeordnet sind. Im Notlaufzustand ist der Notlaufstützkörper hohen Belastungen ausgesetzt, die ggf. zu Beschädigungen des Ringkörpers führen könnten. Mit der speziellen Anordnung der Öffnungen im Ringkörper wird die Festigkeit des Notlaufstützkörpers weitestgehend erhalten und gleichzeitig ein optimaler Luftaustausch zwischen beiden Hohlräumen ermöglicht.

In einer weiteren vorteilhaften Weiterbildung der Erfindung ist vorgesehen, dass in jeder Ebene, die durch die Rotationsachse des Notlaufstützkörpers verläuft, jeweils maximal eine Öffnung angeordnet ist. Wenn mehrere Öffnungen in einer solchen Ebene liegen würden, könnte dadurch die Festigkeitseigenschaften des Notlaufstützkörpers reduziert werden.

In einer weiteren vorteilhaften Weiterbildung der Erfindung ist vorgesehen, dass der Abstand zwischen zwei nebeneinander angeordneten Öffnungen mindestens doppelt so groß ist wie der größte Abstand in der Öffnung. Auf diese Weise bleibt die hohe Steifigkeit und Festigkeit des Notlaufstützkörpers erhalten.

In einer weiteren vorteilhaften Weiterbildung der Erfindung ist vorgesehen, dass die Öffnungen einen kreisrunden Querschnitt besitzen. Der kreisrunde Querschnitt besitzt den Vorteil, dass im Notlaufzustand im Bereich der Öffnungen des Notlaufstützkörpers die auftretenden Spannungsspitzen reduziert werden und der Notlaufstützkörper dadurch eine höhere Pannenlaufleistung besitzt.

In einer weiteren vorteilhaften Weiterbildung der Erfindung ist vorgesehen, dass der Durchmesser der kreisförmigen Öffnungen zwischen 4 und 6 mm beträgt. Eine solche Öffnungsgröße ist ausreichend, um einen ungehinderten Luftaustausch zwischen den Hohlräumen zu ermöglichen, ohne dass damit die Festigkeit des Notlaufstützkörpers reduziert wird.

Anhand eines Ausführungsbeispiels soll die Erfindung näher erläutert werden. Es zeigen:
Fig. 1 ein Fahrzeugrad mit erfindungsgemäßem Notlaufstützkörper als Radialschnitt und
Fig. 2 den erfindungsgemäßen Notlaufstützkörper in perspektivischer Ansicht.

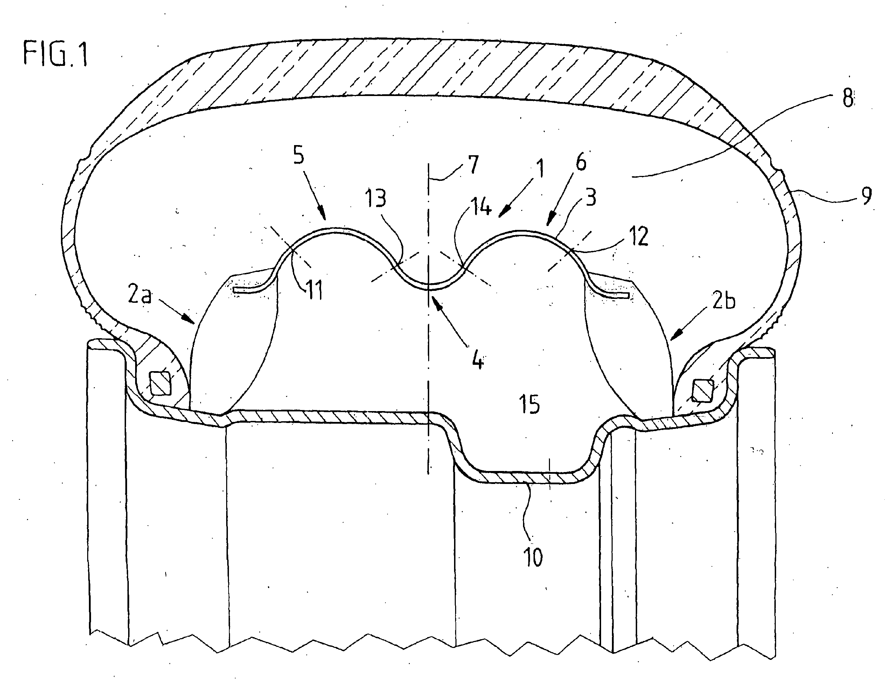

Figur 1 zeigt ein Fahrzeugrad mit erfindungsgemäßem Notlaufstützkörper 1 als Radialschnitt. Der Notlaufstützkörper 1, der rotationssymetrisch ist, ist im Reifenhohlraum 8 des Luftreifens 9 angeordnet und stützt sich über die beiden ringförmigen Stützelemente 2a und 2b auf einer herkömmlichen Fahrzeugfelge 10 ab. Der Notlaufstützkörper 1 besteht im Wesentlichen aus den beiden Stützelementen 2a und 2b sowie dem schalenförmigen Ringkörper 3. Die Öffnungen im Ringkörper befinden sich an den Positionen 11, 12, 13 und 14. Bei einer 19-Zoll-Felge sollen insgesamt 48 Bohrungen im Ringkörper des Notlaufstützkörpers angeordnet sein. An den Positionen 11 und 12 liegen hintereinander in Umfangsrichtung des Ringkörpers jeweils 16 Öffnungen. Im Bereich der radialen Einschnürung 4 sind auf den Umfang des Ringkörpers verteilt jeweils 8 weitere Öffnungen in den Positionen 13 und 14 angeordnet. Die Öffnungen ermöglichen einen optimalen und schnellen Luftaustausch zwischen dem Reifenhohlraum 8 und dem Hohlraum 15 des Notlaufstützkörpers. Auf diese Weise wird der Federungskomfort des Luftreifens 9 verbessert, da ein insgesamt größeres Luftvolumen als Luftpolster bereitgestellt werden kann. Ferner wird durch die Öffnungen ein schnelleres Befüllen des Reifenhohlraumes 8 ermöglicht.

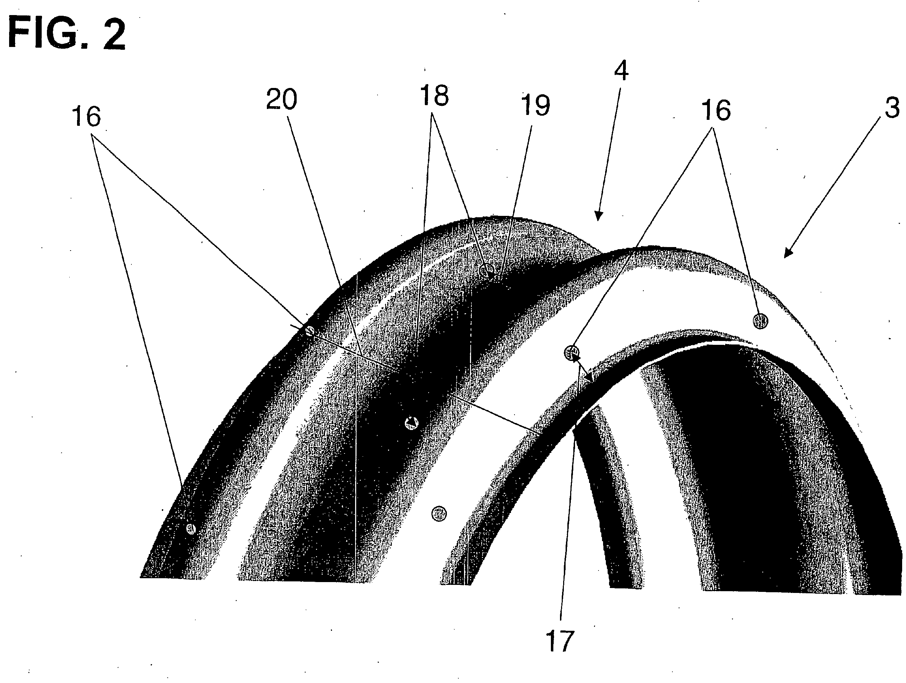

Figur 2 zeigt einen Teilausschnitt einer perspektivischen Darstellung des Ringkörpers 3. Bei den Öffnungen 16 und 18, die in Umfangsrichtung des Ringkörpers in regelmäßigen Abständen zueinander liegen, handelt es sich bei diesem Ausführungsbeispiel um Bohrungen mit einem Durchmesser von etwa 5 mm. Der Abstand 17 zum Bohrungsmittelpunkt beträgt etwa 12 mm. Im Bereich der Einschnürung 4 sind die Öffnungen 18 abwechselnd auf der linken und rechten Seite der Einschnürung 4 angeordnet. Der Abstand 19 zur tiefsten Stelle der Einschnürung 4 beträgt etwa 6 mm. Die Gerade 20 spannt mit der in der Figur nicht dargestellten Rotationsachse des Ringkörpers 3 eine gedachte Ebene auf, in welcher immer nur eine Öffnung liegen soll. Wenn mehrere Öffnungen in einer solchen Ebene liegen, würde dadurch die Festigkeit des Ringkörpers reduziert. Im Notlaufzustand des Reifens könnte dann der Fall eintreten, dass der Ringkörper in diesem Bereich beschädigt wird.

### Bezugszeichenliste (ist Teil der Beschreibung)

- 1: Notlaufstützkörper
- 2a,2b: Stützelemente
- 3: Ringkörper
- 4: radiale Einschnürung des Ringkörpers
- 5,6: nach radial außen gekrümmte Wölbungen des Ringkörpers
- 7: axiale Mittelachse
- 8: Reifenhohlraum
- 9: Luftreifen
- 10: Fahrzeugfelge
- 11: Position der Öffnungen im linken Bereich des Ringkörpers
- 12: Position der Öffnungen im rechten Bereich des Ringkörpers
- 13,14: Position der Öffnungen im mittleren Bereich des Ringkörpers
- 15: Hohlraum des Notlaufstützkörpers
- 16: Öffnungen im Ringkörper
- 17: Abstand zum Bohrungsmittelpunkt
- 18: Öffnungen im Einschürungsbereich des Ringkörpers
- 19: Abstand zum Bohrungsmittelpunkt der Öffnungen in der Einschnürung

## Patentansprüche

1. Fahrzeugrad mit einem auf einer Radfelge (10) befestigten Luftreifen (8) und einem Notlaufstützkörper (1), der als schalenförmiger Ringkörper (3) ausgebildet ist und sich mit seinen beiden axial äußeren Randbereichen (4,5) über ringförmige Stützelemente (2a,2b) auf der Radfelge (10) abstützt,
wobei der Ringkörper (3) mehrere Öffnungen aufweist,
wobei der Ringkörper (3) zwei durch eine radiale Einschnürung (4) voneinander
getrennte nach radial außen gekrümmte Wölbungen (5,6) aufweist, **dadurch gekennzeichnet,**
**dass** die Öffnungen außerhalb der radial äußersten Stellen der nach radial außen gekrümmten Wölbungen (5,6) und außerhalb der radial innersten Stelle der radialen Einschnürung (4) angeordnet sind.

2. **Fahrzeugrad nach Anspruch 1,**
**dadurch gekennzeichnet, dass**
in jeder Ebene, die durch die Rotationsachse des Notlaufstützkörpers verläuft, jeweils maximal eine Öffnung angeordnet ist.

3. Fahrzeugrad nach einem der Ansprüche 1 bis 2,
**dadurch gekennzeichnet, dass**
der Abstand zwischen zwei nebeneinander angeordneten Öffnungen mindestens doppelt so groß ist wie der größte Abstand in der Öffnung.

4. Fahrzeugrad nach einem der Ansprüche 1 bis 3,
**dadurch gekennzeichnet, dass**
die Öffnungen (16,18) einen kreisrunden Querschnitt besitzen.

5. Fahrzeugrad nach einem der Ansprüche 1 bis 4,
**dadurch gekennzeichnet, dass**
der Durchmesser der kreisförmigen Öffnungen (16,18) zwischen 4 und 6 mm beträgt.

## Claims

1. Vehicle wheel comprising a tyre (8), fastened on a wheel rim (10), and a run-flat support body (1), which is configured as a shell-shaped annular body (3) and is supported on the wheel rim (10), with its two axially outer marginal regions (4, 5), by means of annular supporting elements (2a, 2b),
the annular body (3) having a plurality of openings,
the annular body (3) having two radially outwardly curved arches (5, 6), mutually separated by a radial constriction (4),
**characterized in that** the openings are disposed outside the radially outermost points of the radially outwardly curved arches (5, 6) and outside the radially innermost point of the radial constriction (4).

2. Vehicle wheel according to Claim 1,
**characterized in that**
in each plane which runs through the rotational axis of the run-flat support body there is respectively disposed a maximum of one opening.

3. Vehicle wheel according to one of Claims 1 to 2,
**characterized in that**
the distance between two mutually adjacent openings is at least twice as great as the greatest distance in the opening.

4. Vehicle wheel according to one of Claims 1 to 3,
**characterized in that**
the openings (16, 18) have a circular cross section.

5. Vehicle wheel according to one of Claims 1 to 4,
**characterized in that**
the diameter of the circular openings (16, 18) measures between 4 and 6 mm.

## Revendications

1. Roue de véhicule comprenant un pneumatique (8) fixé sur une jante de roue (10) et un corps d'appui de secours (1), qui est réalisé sous forme de corps annulaire en forme de coque (3) et qui s'appuie avec ses deux parties de bord axialement extérieures (4, 5) par le biais d'éléments d'appui annulaires (2a, 2b) sur la jante de roue (10),
le corps annulaire (3) présentant plusieurs ouvertures,
le corps annulaire (3) présentant deux bombements (5, 6) courbés radialement vers l'extérieur, séparés l'un de l'autre par un étranglement radial (4),
**caractérisée en ce que**
les ouvertures sont disposées en dehors des parties les plus externes radialement des bombements (5, 6) courbés radialement vers l'extérieur et en dehors des parties les plus internes radialement de l'étranglement radial (4).

2. Roue de véhicule selon la revendication 1,
**caractérisée en ce que**
dans chaque plan qui s'étend à travers l'axe de rotation du corps d'appui de secours, est disposée à chaque fois au maximum une ouverture.

3. Roue de véhicule selon l'une quelconque des revendications 1 ou 2,
**caractérisée en ce que**
la distance entre deux ouvertures adjacentes est au moins deux fois plus grande que la distance la plus grande dans l'ouverture.

4. Roue de véhicule selon l'une quelconque des revendications 1 à 3,
**caractérisée en ce que**
les ouvertures (16, 18) possèdent une section transversale ronde circulaire.

5. Roue de véhicule selon l'une quelconque des revendications 1 à 4,
**caractérisée en ce que**
le diamètre des ouvertures de forme circulaire (16, 18) est compris entre 4 et 6 mm.
